**Europäisches Patentamt**

**European Patent Office**

**Office européen des brevets**

(19)

(11) Veröffentlichungsnummer : **0 377 832 B1**

(12) # EUROPÄISCHE PATENTSCHRIFT

(45) Veröffentlichungstag der Patentschrift :
**10.03.93 Patentblatt 93/10**

(51) Int. Cl.⁵ : **C02F 11/18**

(21) Anmeldenummer : **89122763.9**

(22) Anmeldetag : **09.12.89**

(54) **Verfahren zur Behandlung von Biomassen, z.B. Klärschlämmen, Gülle, usw.**

(30) Priorität : **13.12.88 DE 3841917**
**31.08.89 DE 3928815**

(43) Veröffentlichungstag der Anmeldung :
**18.07.90 Patentblatt 90/29**

(45) Bekanntmachung des Hinweises auf die
Patenterteilung :
**10.03.93 Patentblatt 93/10**

(84) Benannte Vertragsstaaten :
**AT BE CH DE ES FR GB GR IT LI LU NL SE**

(56) Entgegenhaltungen :
**EP-A- 0 005 011**

(56) Entgegenhaltungen :
**EP-A- 0 146 526**
**DE-A- 2 035 855**
**DE-A- 3 520 458**
**US-A- 4 210 680**

(73) Patentinhaber : **Still Otto GmbH**
**Christstrasse 9 Postfach 10 18 50**
**W-4630 Bochum 1 (DE)**

(72) Erfinder : **Tippmer, Kurt**
**Bromberger Strasse 34**
**W-4350 Recklinghausen (DE)**

(74) Vertreter : **Dahlkamp, Heinrich-Leo, Dipl.-Ing.**
**c/o Still Otto GmbH Patentabteilung**
**Christstrasse 9 Postfach 10 18 50**
**W-4630 Bochum 1 (DE)**

Jouve, 18, rue Saint-Denis, 75001 PARIS

**Beschreibung**

Die Erfindung bezieht sich auf ein Verfahren zur Behandlung von Biomassen, z. B. bei der biologischen Abwasserreinigung anfallenden Klärschlämmen, Gülle, sonstigen mikrobiologischen oder nachwachsenden Biomassen.

Aus der EP-A 0 052 334 ist ein Verfahren zur Gewinnung von festen, flüssigen und gasförmigen Brennstoffen aus organischem Material, insbesondere Klärschlamm aus Anlagen zur Abwasserreinigung, bekannt, wobei das Einsatzmaterial mit einer Geschwindigkeit von 5 bis 30 °C/min unter Luftabschluß auf eine Konvertierungstemperatur von 200 bis 400 °C erhitzt wird und die beim Erhitzen entweichenden Gase und Dämpfe durch geeignete Gas- und Flüssigkeitsabscheider geleitet werden. Der Konvertierungsprozeß dauert ca. 2 bis 3 Stunden. Die geringen Mengen an festen Rückständen sollen dabei entweder verbrannt oder in anderer Weise entsorgt werden.

Aus der DE-OS 36 17 848 ist weiterhin ein Verfahren zum Entfernen von Schwermetallen aus Klärschlämmen oder Schlämmen jeglicher Art bekannt, wobei die Klärschlämme entwässert oder in einer wäßrigen Lösung gespült, gewaschen, aufgelöst und durch das absorbierende Waschmedium gereinigt werden sollen und das zurückgehaltene Wasser über eine Elektrolysezelle geleitet wird. Insbesondere die Verwendung einer Elektrolysezelle ist dabei sehr aufwendig.

Die bei der landwirtschaftlichen Viehhaltung anfallende Gülle (Flüssigmist) wird wegen ihres hohen Gehaltes an organischen Substanzen und wertvollen Pflanzenährstoffen (Stickstoff, Phosphor, Kalium, Calcium, Magnesium) in der Landwirtschaft hauptsächlich zur Pflanzendüngung und Bodenverbesserung eingesetzt. Unter wirtschaftlichen Gesichtspunkten ist eine möglichst weitgehende Nutzung der Güllewertstoffe anzustreben, da auf diese Weise ein bedeutsamer Teil des gesamten Pflanzennährstoffbedarfs gedeckt werden kann.

Andererseits wird die bisherige Art der Gülleverwertung für die seit Jahren stetig zunehmende Nitratbelastung der Grundwässer mit verantwortlich gemacht. Diese unerwünschte Grundwasserbeeinträchtigung durch Nährstoffauswaschungen wird insbesondere durch übermäßigen Einsatz und vor allem durch die Ausbringung zu ungeeigneten Düngezeitpunkten verursacht. Eine überdurchschnittlich hohe Viehdichte und mengenmäßige sowie zeitliche Beschränkungen für die Gülleverwendung haben regional und einzelbetrieblich zu erheblichen Überschußmengen geführt. Diese können derzeit weder ökologisch noch ökonomisch sinnvoll verwertet werden.

Aus der EP 0 146 526 Al ist ein Verfahren zur Herstellung von organischen Stoffen oder Hydrolysaten aus Abwässerschlämmen zur Gewinnung von biotechnisch verwertbaren Substraten bekannt, bei dem die Abwasserschlämme bzw. organischen Substanzen in einer Zentrifuge unter Sattdampf bei 1 bis 40 bar zentrifugiert werden und das Zentrifugat kontinuierlich ausgebracht wird. Durch Anwendung verschiedener Drücke, Sattdampftemperaturen, Behandlungszeiten und Drehzahlen der Zentrifuge soll dabei ein breites Spektrum an Hydrolysaten gewonnen werden. Die vorgesehenen Behandlungszeiten liegen im Bereich von 1 bis 60 Minuten, vorzugsweise 3 bis 30 Minuten. Dem Dampf können Hydrolysierhilfsmittel, wie z. B. NaOH oder anorganische Säuren, zugegeben werden.

Aus der DE-A 20 35 855 ist weiterhin ein Verfahren zur biologischen Abwasserreinigung bekannt, wobei der vorgereinigte Schlamm unter Zugabe von Alkali auf einen pH-Wert von 10 bis 13 alkalisch gemacht und anschließend bei Temperaturen zwischen 90 und 180 °C hydrolysiert und anschließend nach Abscheiden eines unlöslichen Rückstandes die erhaltenen Spaltprodukte zur weiteren Umsetzung wieder in den Reinigungsprozeß zurückgeführt werden. Es hat sich erwiesen, daß hierbei keine ausreichende Zersetzung der Komponenten erreicht wird. Insbesondere werden eventuelle Schwermetalle und Pestizide bei dem Temperaturbereich nicht ausreichend zerstört bzw. abgetrennt.

Die der Erfindung zugrunde liegende Aufgabe soll darin bestehen, ein Verfahren der eingangs definierten Art vorzuschlagen, bei dem die Nachteile des Standes der Technik beseitigt werden.

Zur Lösung dieser Aufgabe wird das im Kennzeichen des Hauptanspruches wiedergegebene Verfahren vorgeschlagen. In den Unteransprüchen 2 bis 14 finden sich weitere besonders günstige Verfahrensvorschläge wieder.

Der Klärschlamm, bestehend aus dem sedimentierten und/oder flotierten Vorklärschlamm und dem überschüssigen Belebtschlamm der biologischen Reinigungsstufe, hat in der Regel eine Trokkensubstanz-Konzentration von 30 bis 40 g/l und ist in dieser Form nicht deponier-, ausstreu- oder anderweitig verwendungsfähig (Verbrennung, Pyrolyse). Je nach Verwendungszweck des Schlammes muß der Klärschlamm mechanisch (max. 30 Gew% TS) oder thermisch (bis > 95 Gew%) getrocknet werden.

Bei dem neuentwickelten Verfahren der Temperatur-Druckhydrolyse sind diese energieaufwendigen Vorstufen nicht nötig, da das Verfahren kostengünstig im Bereich 60 bis 80 g TS/l arbeiten kann.

Das erfindungsgemäße Verfahren der Temperatur-Druck-Hydrolyse, gegebenenfalls unter Verwendung von anorganischen Katalysatoren und Additiven, ist besonders geeignet zur Umwandlung von mikrobiologischen Biomassen in Wertstoffe.

Die Versuchsergebnisse mit wäßrigen kommunalen Klärschlämmen zeigen im Vergleich zu den bisher bekannten Verfahrenstechniken der Tief- und Hochtemperatur-Pyrolyse deutliche Vorteile in der Wert-

2

stoffausbeute, im Energieverbrauch und in der Verwertung der von Schwermetallen befreiten Rest-Biomasse.

Durch die Wirkungsweise der Hydrolyse bei Temperaturen bis 300 °C und der Anwendung von anorganischen Katalysatoren werden die Biopolymere eines Biomassen-Rohschlammes (Proteide, Lipide, Polynucleoide, Polysaccharide) in monomere Wertstoffe (Aminosäuren, Fettsäuren, Fettalkohole, Fettamine, Alkane, Alkene und Aromaten) abgebaut.

Die Zusammensetzung der Wertstofffraktionen ist stark abhängig von der Temperatur, der Verweilzeit und dem pH-Wert des Hydrolysates und zwar in der Art, daß im Hydrolyse-Temperaturbereich von >180 bis 250 °C Fraktionen mit hohem Aminosäureanteil gewonnen werden. Im Temperaturbereich von 250 bis 300 °C erfolgt bereits eine hohe Desaminierung und Decarboxylierung der Aminosäuren, so daß die produzierten Wertstofffraktionen in der Hauptsache Fettsäuren, Fettalkohole, Fettaminen enthalten.

Parallel zu der in der wäßrigen Lösung stattfindenden temperatur- und pH-Wert-geregelten Hydrolyse verläuft die chemische Umwandlung der in der Roh-Biomasse akkumulierten Schwermetalle in wasserlösliche Verbindungen und deren Lösung in das Hydrolysat.

Bei der Reinigung von kommunalen Abwässern entsteht durch den Vorklärschlamm der Sedimentationsstufe und den überschüssigen Belebtschlamm der aeroben Belebtschlammstufe ein Schlammgemisch mit einem hohen Anteil von mikrobiologischer Biomasse.

Aus diesen Biopolymeren können mittels der thermischen Druckhydrolyse, bei der Anwesenheit von anorganischen Katalysatoren wie Ca, Na und K, monomere Wertstoffe wie Aminosäuren, Fettsäuren, Fettalkohole, Glycose usw. gewonnen werden.

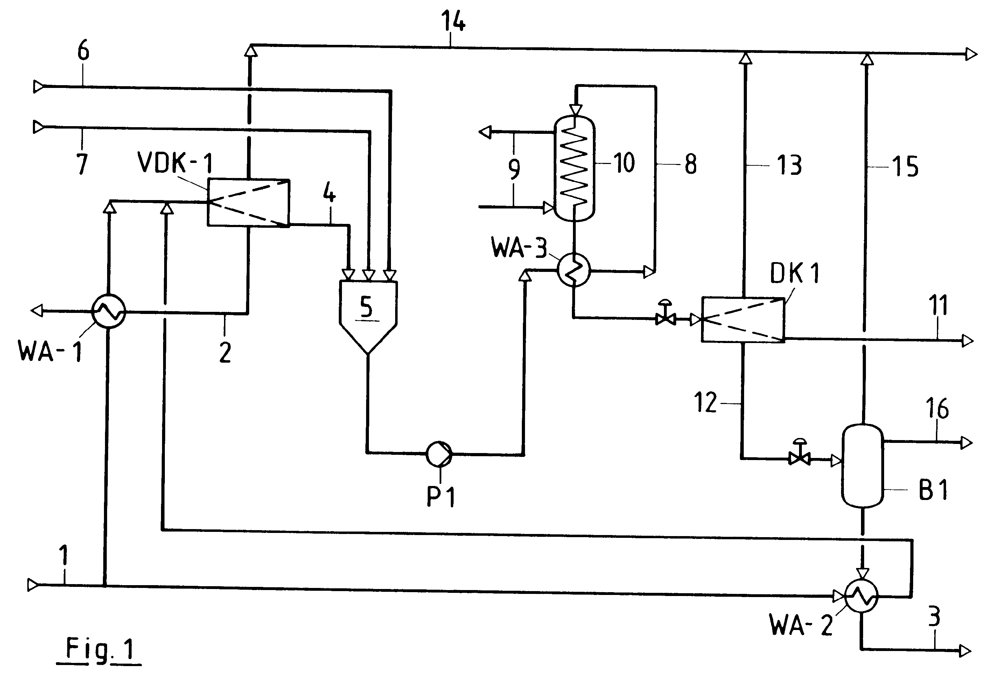

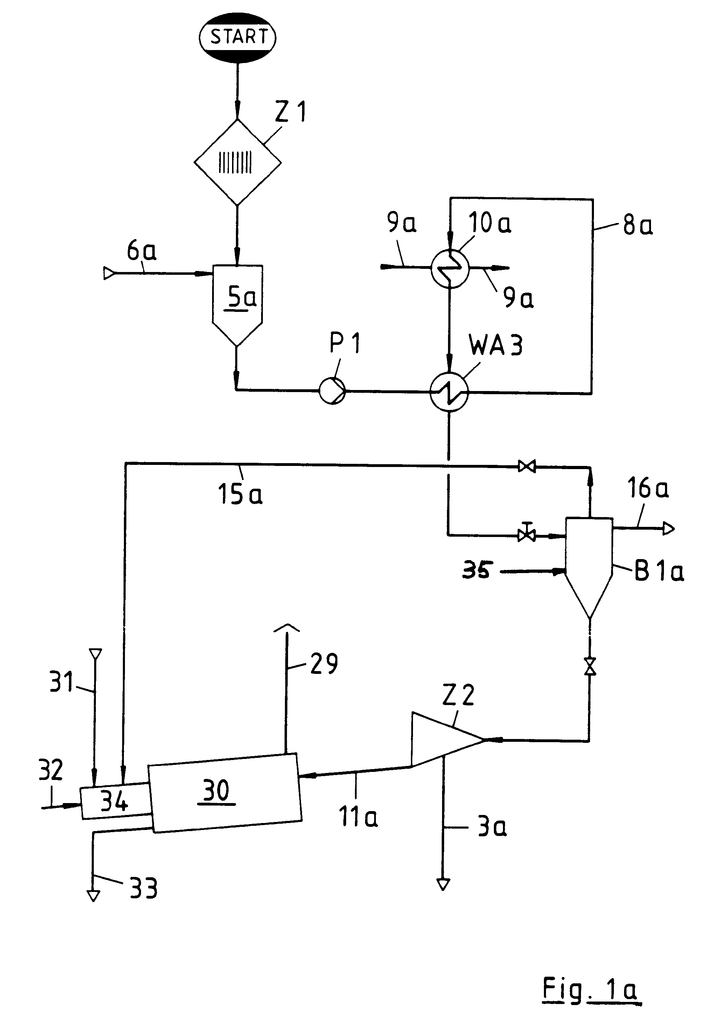

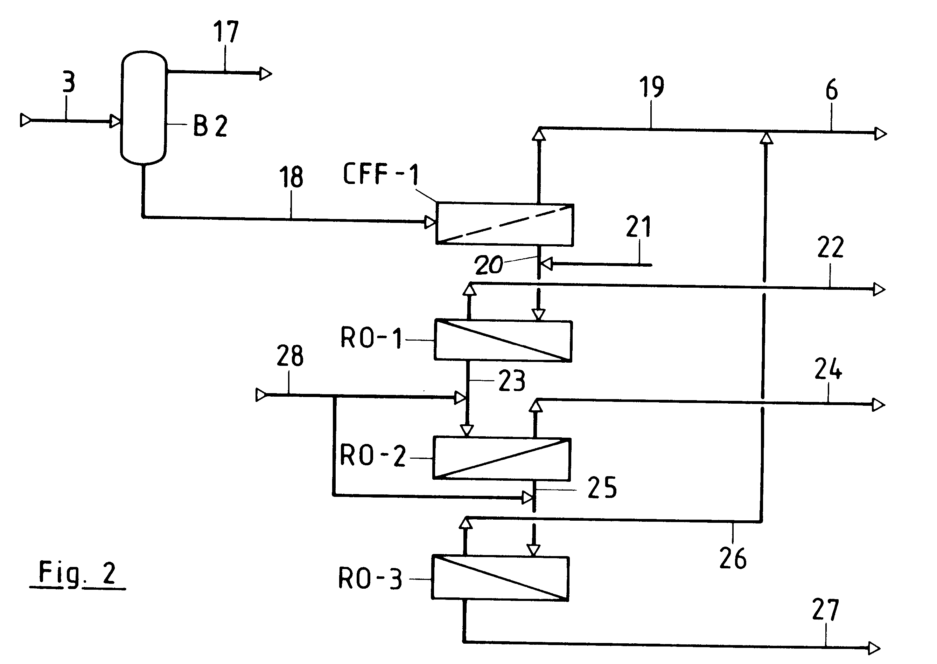

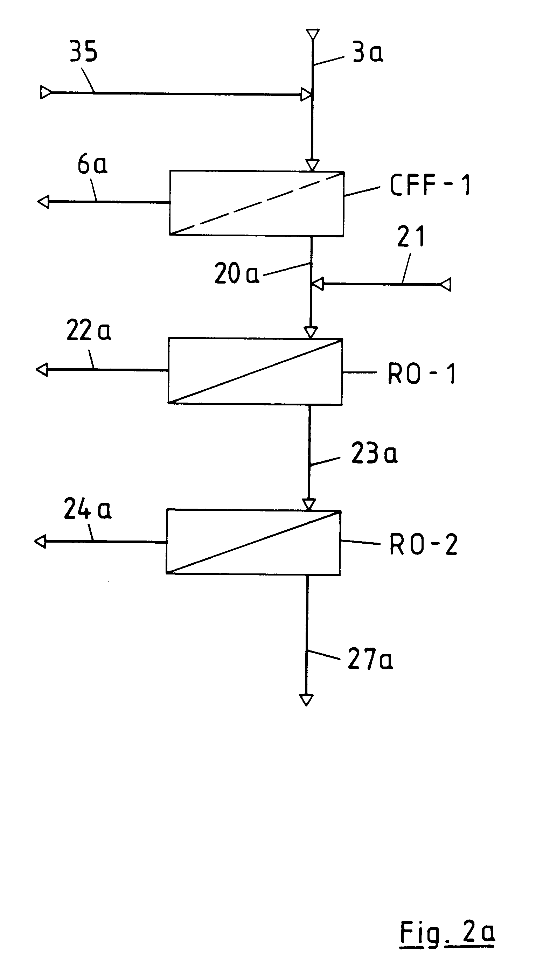

Die Erfindung wird anhand der beigefügten Figuren 1, 1a, 2 und 2a näher erläutert.

Figuren 1, 1a sind Verfahrensschemata der Temperatur-Druck-Hydrolyse.

Figuren 2, 2a zeigen das Verfahrensprinzip der Hydrolysataufbereitung.

Anwendungsbeispiel 1:

(Klärschlammbehandlung; vgl. Figuren 1 und 2)

In einer kommunalen Abwasserreinigungsanlage werden stündlich 2.500 kg TS/h mit einem Biomassenanteil von 1.700 kg OTS/h produziert. Der anorganische Anteil von 800 kg anorganische TS/h besteht in der Hauptsache aus neutralen Verbindungen wie $SiO_2$, $Al_2O_3$ sowie $CaCO_3$ usw. Bedingt durch verschiedene Einleiter hat jedoch der anorganische Anteil 2 kg/h (800 mg/kg TS) toxische Schwermetalle wie Blei, Quecksilber, Cadmium, Chrom usw., die als wasserunlösliche Verbindungen vorliegen und z. B. eine Düngemittelverwendung des eingedickten Klärschlammes (ca. 25 Gew% TS) unterbinden.

Der pumpfähige Klärschlamm (1) in einer stündlichen Menge von 60 m³ Wasser und 2.500 kg TS wird in den Wärmeaustauschern (WA-1) und (WA-2) im Gegenstrom mit 30 m³ Vorentwässerungsfiltrat (2) (60 °C) und dem feststofffreien Hydrolysat (3) (80 °C) auf durchschnittlich 60 °C vorgewärmt.

Bei dieser Temperatur sind die Wasserbindungskräfte innerhalb der Belebtschlammasse teilweise aufgehoben, so daß der Klärschlamm im Vordekanter (VDK-1) einfach auf 80 g/l aufkonzentriert werden kann. Die anfallende Filtratmenge (2) von 30 m³/h ist nicht, wie im Falle der Pyrolyse (> 120 °C), mit Spaltprodukten der organischen Biomasse, wie z. B. $NH_3$, belastet und kann direkt dem Ablauf der Reinigungsstufe beigemischt werden.

Bedingt durch die Temperatur von 60 °C ist die Pumpfähigkeit des vorentwässerten Klärschlammes (4) gegeben, so daß mittels marktgängiger Pumpen (P-1) auf den temperaturbedingten Hydrolysedruck gefördert werden kann.

Das Einsatzgemisch (8) für die Temperatur-Druck-Hydrolyse (10) wird dem Einsatzbehälter (5), in dem auch die Retentate der Hydrolysataufbereitung (6) gesammelt werden und ebenfalls eine Hydrolyse- Katalysator-Zugabe (7) möglich ist, entnommen.

Im folgenden wird ein Beispiel für eine Hydrolysetemperatur von 200 °C (max. Aminosäureausbeute) beschrieben.

Das Einsatzgemisch (8) in einer Menge von 33.000 kg Wasser und 2.500 kg TS pro Stunde wird im Wärmeaustauscher (WA-3) indirekt auf 180 °C vorgewärmt und zum Hydrolysereaktor (10) gepumpt. Der Reaktor (10) ist indirekt mit z. B. Thermalöl (9) von 250 °C beheizt, so daß sich das Reaktorgemisch auf 200 °C aufheizen kann. Die Verweilzeit im Hydrolysereaktor (10) beträgt bei 200 °C in der Regel 0,5 Stunden. Bedingt durch die Prozeßparameter Temperatur, Druck, pH-Wert und Verweilzeit werden die Biopolymere des Klärschlammes zu einem Produktgemisch mit hohen Anteilen an monomeren Wertstoffen wie Aminosäuren, Fettsäuren, Fettalkoholen und Aminen mit einem Umwandlungsgrad von 65 % hydrolysiert.

Bei der thermischen Hydrolyse werden auch die in der Biomasse akkumulierten Schwermetalle frei und durch die temperaturbedingte Protolyse der bei der Spaltung der Desoxyribonukleinsäure (DNA) und Ribonukleinsäure (RNA) frei werdenden $PO_4$-Ionen und durch eventuell zusätzliche Dosierung von Mineralsäuren in eine wasserlösliche Verbindung umgewandelt und im Hydrolysat gelöst.

Nach der Abkühlung des Reaktionsgemisches von 35.500 kg/h mit einem Wasseranteil von 32.870 kg/h im Wärmeaustauscher (WA-3) auf 80 °C wird das Gemisch entspannt und im Dekanter (DK-1) in eine Feststoffphase (11) mit der Rest-Biomasse von 1.435 kg/h und eine Feuchte von 400 kg Wasser/h sowie einer Hydrolysatmenge (12) von 33.581 kg/h getrennt. Bei der Entspannung werden insgesamt 84 kg/h Hydrolysegas (13), (14), (15) frei, das zu mehr als 80 Vol% aus $CO_2$ sowie Anteilen von CO, $H_2$ und $NH_3$ besteht und im Thermalölerhitzungssystem verbrannt wird.

In den Abscheidern (B-1) und (B-2) werden bei 80 °C (B-1) und nach der Abkühlung des Hydrolysates im Wärmeaustauscher (WA-2) auf 30 °C (B-2) insgesamt 84 kg/h wasserunlösliche Hydrolyseprodukte (16) bzw. (17), in der Hauptsache Fettsäuren, abgetrennt.

Die weitere Abbereitung des Hydrolysates in einer Menge von 33.497 kg/h wird nach Figur 2 mittels eines Membransystemes, das nach dem Prinzip der fraktionierenden Umkehrosmose arbeitet, durchgeführt.

Die Vorfiltration des Hydrolysates (18) wird mittels einer Cross-Flow-Filtrationsstufe (CFF-1) praktiziert und ein Filtrat (20) von 30.497 kg/h mit einem Kolloid-Index von weniger als 1 gewonnen. Das anfallende Retentat (19) von 3.000 kg/h wird zum Einsatzbehälter (5) rückgeführt.

In der ersten Umkehrosmose-Stufe (RO-1) werden als Retentat mit z. B. einer Acetat-Membrane bei einem pH-Wert von 4 bis 6 und einem Betriebsdruck von 50 bar die gelösten Schwermetalle (22) als eine wäßrige Fraktion von 525 kg/h mit 25 kg Salzen (5 Gew%) abgetrennt. Aus dem anfallenden Permeat (23) in einer Menge von 32.972 kg/h werden in einer zweiten (RO-2) und gegebenenfalls dritten (RO-3) Umkehrosmose-Stufe bei einem pH-Wert von > 8 und z. B. einer Polyamid-Membrane und Betriebsdrücken von 60 bar als Retentat eine wäßrige, organische Fraktion (24) von 11.002 kg/h gewonnen, deren organischer Anteil 1.002 kg/h (10 Gew%) beträgt.

Der organische Anteil hat z. B. 217 kg/h kurzkettige Carbonsäuren, Aldehyde sowie eine Menge von 785 kg/h mit 590 kg/h Aminosäuren und als Rest z. B. Alkohole, Phenole.

Sowohl das anorganische (22) als auch das organische (24) Retentat wird anschließend in mehrstufigen, nicht dargestellten Eindampfanlagen aufkonzentriert und im Falle der Organika in einem Fraktionssystem in die verschiedenen Wertstoffe destilliert.

Das Permeat (27) der letzten Umkehrosmose-Stufe ist eine Reinwasserfraktion von hoher Qualität in einer Menge von 18.970 kg/h.

Die jeweilige pH-Wert-Einstellung für die verschiedenen Umkehrosmose-Stufen erfolgt durch die Zudosierung von Säuren (21) bzw. Laugen (28).

Eine alternative Betriebsweise der thermischen Druckhydrolyse mit dem Ziel einer erhöhten Fettsäureausbeute wird bei einer Temperatur von 300 °C durchgeführt und ist im Prinzip analog der 200 °C-Hydrolyse.

Bei der gleichen Einsatzmenge von stündlich 2.500 kg TS und 1.700 kg OTS beträgt der Biopolymer-Umwandlungsgrad bei 300 °C mindestens 75 %, so daß die Rest-Biomasse nach dem Dekanter (DK-1) nur 1.520 kg/h mit 1.220 kg TS beträgt.

Bedingt durch die höhere Hydrolyse-Temperatur erhöht sich jedoch der Gasanfall auf 185 kg/h und die wasserunlösliche Fraktion (16), bedingt z. B. durch die Desaminierung und Decarboxylierung der Aminosäuren, auf 203 kg/h.

Weiterhin erhöht sich die anorganische Fraktion (22) nach der ersten Umkehrosmose-Stufe (RO-1) auf 630 kg/h mit 30 kg Feststoff.

Die wäßrige organische Fraktion (24) erhöht sich nur unwesentlich auf eine Menge von 11.012 kg/h mit einem organischen Anteil von 1.012 kg/h. Das Permeat (27) der letzten Umkehrosmose-Stufe beträgt 18.950 kg/h Reinwasser.

Im Falle der Anwendung einer dritten Umkehrosmose-Stufe (RO-3) wird das anfallende Retentat (26) ebenfalls, wie im Falle der Cross-Flow-Filtration, in den Prozeß rückgeführt.

Anwendungsbeispiel 2:

(Behandlung von Gülle; vgl. Figuren 1a und 2a)

Die Gülle, bestehend aus dem Kot, Harn und Abschlammwasser, hat in der Regel eine Trockensubstratkonzentration von 80 bis 220 g/l und ist in dieser Form nicht deponier-, ausstreu- oder anderweitig verwendungsfähig.

Bei dem neu entwickelten Verfahren der Temperatur-Druckhydrolyse sind diese energieaufwendigen Vorstufen oder Verdünnungen (Legehennen) nicht nötig, da das Verfahren direkt kostengünstig die anfallende Gülle verarbeiten kann.

Bei der Mast von 4.200 Schweinen (60 kg) werden täglich 27 m³ Gülle mit 2.650 kg TS und einem Biomassenanteil (OTM) von 1.800 kg produziert. Der anorganische Anteil (ATM) von 850 kg besteht in der Hauptsache aus den neutralen Verbindungen der Komponenten, wie $P_2O_5$, $K_2O$, $Na_2O$, MgO, CaO usw.

Bei der Verfügbarkeit von ca. 80 % des Verarbeitungssystems ist die Leistung des Systems ca. 1,4 m³/h Gülle mit ca. 140 kg TS/h, die dem Güllesammler entnommen, im Desintegrator (Z-1) mechanisch aufgeschlossen und direkt im Einsatzbehälter (5a) gesammelt wird (vgl. Figur 1a).

Die Einsatz-Kolbenmembranpumpe (P-1) fördert anschließend die Gülle durch das Wärmeaustauschersystem (WA-3), wo sie im Gegenstrom mit der hydrolisierten Gülle auf ca. 230 °C vorgewärmt wird. Im Hydrolysereaktor (10a) erfolgt mittels eines Thermalöles (9a) indirekt die Einstellung der Hydrolysetemperatur von 250 °C.

Bei einer Reaktionszeit von ca. 1 Stunde und einem pH-Wert von < 7 wird die OTS teilweise in wasserlösliche und wasserunlösliche Produkte durch die Hydrolyse gespalten. Durch die Zugabe von z. B.

Phosphorsäure (35) zu den aus der RNA und DNA frei werdenden $PO_4^{3-}$-Ionen können die $NH_4^+$-Ionen z. B. der Harnstoffzersetzung gebunden werden.

Aus dem auf ca. 40 °C abgekühlten Reaktionsgemisch wird im Abscheider (B-1) das Produktionsgas (15a) und die organische Fraktion (16a) abgetrennt. Anschließend wird das Gemisch in der Dekantier-Zentrifuge (Z-2) in eine Feststoffphase (Dünger) (11a) und eine Flüssigphase (Hydrolysat) (3a) getrennt. Die Feststoffphase (11a) wird in einem Trommeltrockner (30) von dem Restwasser befreit und als Trockendünger (33) abgesackt. Die Beheizung der Trommel erfolgt mittels des Hydrolysates (15a) unter Zusatz von Luft (31) und Fremdgas (32), das in einer Spezialbrennkammer (34) (Typ Still Otto) verbrannt und als NOx-armes Rauchgas (29) in die Atmosphäre entlassen wird.

Die Auftrennung des Hydrolysates (3a) erfolgt in einem Membran-System nach den Regeln der Cross-Flow-Filtration (CFF) und der polymer- und pH-Wert-abhängigen Umkehr-Osmose (vgl. Figur 2a).

Die erste Stufe des Systems (CFF-1) arbeitet nach dem Prinzip der Cross-Flow-Filtration mit Polypropylen-Membranen, deren Poren einen äquivalenten Durchmesser von 0,2 µm haben. Die Funktion dieses Systems ist, wie bei bekannten Alternativen, nicht gestört, da die Schleimbildner der Gülle bei der thermischen Hydrolyse zerstört worden sind. Das anfallende Konzentrat (6a) dieser Stufe wird in den Feedbehälter (5a) recycled und durchläuft somit nochmals die Hydrolyse.

Die Abtrennung der anorganischen Fraktion erfolgt in einer Umkehr-Osmose-Stufe (RO-1) aus dem Permeat (20a) bei einem pH-Wert von < 5 mittels Acetat-Membranen. Bei diesen Bedingungen werden mindestens 95 % der Salze zurückgehalten. Das Konzentrat (A-Fraktion) (22a) mit ca. 5 % Salzen (z. B. $NH_4^+$) kann gesammelt und gezielt als Flüssigdünger verwendet werden.

Die Abtrennung der wasserlöslichen Produkte (24a) (z. B. Aminosäure) erfolgt in der nächsten, eventuell mehrstufigen Stufe (RO-2) bei einem pH-Wert > 7 mittels Polyamid-Membranen. Das Permeat dieser Stufe ist ein Brauchwasser (27a) mit geringen Anteilen an anorganischen und organischen Komponenten und kann für die Stallspülung zurückgeführt werden. Die wasserlöslichen Produkte (Aminosäuren) (24a) lassen sich auf einfache Weise als Viehfutterzusatz verwerten.

Bezugszeichenliste

(1) Biomassen-Rohschlamm bzw. Klärschlamm
(2) Filtrat aus (VDK-1)
(3, 3a) feststofffreies Hydrolysat zu (B-2)
(4) vorentwässerter Klärschlamm
(5, 5a) Einsatzbehälter
(6, 6a) Rücklauf von der Hydrolysataufbereitung
(7) Hydrolyse-Katalysator
(8, 8a) Einsatzgemisch für (10)
(9, 9a) Thermalölkreislauf
(10, 10a) Temperatur-Druck-Hydrolyse-Reaktor
(11, 11a) Feststoffphase, Rest-Biomasse
(12) Hydrolysat aus (DK-1)
(13, 14, 15, 15a) Hydrolysegas
(16, 16a/17) wasserunlösliche Hydrolyseprodukte
(18) Hydrolysat nach (B-2)
(19) Retentatrücklauf zu (5)
(20, 20a) Filtrat aus (CFF-1)
(21) Säuredosierung
(22, 22a) anorganische Fraktion (bei Klärschlammbehandlung gegebenenfalls mit Schwermetall)
(23, 23a) Permeat aus (RO-1)
(24, 24a) wäßrige, organische Fraktion
(25) Permeat aus (RO-2)
(26) Permeat aus (RO-3)
(27, 27a) Reinwasser
(28) Laugedosierung
(29) Rauchgas
(30) Trommeltrockner
(31) Luft
(32) Fremdgas
(33) Trockendünger
(34) Brennkammer
(WA-1 bis WA-3) Wärmeaustauscher
(VDK-1) Vordekanter
(DK-1) Dekanter
(P-1) Pumpe
(B-1, B-1a/B-2) Abscheider
(CFF-1) Cross-Flow-Filtrationsstufe
(RO-1) bis
(RO-3) Umkehrosmose-Stufe
(Z-1) Desintegrator
(Z-2) Dekantierzentrifuge

## Patentansprüche

1. Verfahren zur Behandlung von Biomassen, z. B. bei der biologischen Abwasserreinigung anfallenden Klärschlämmen, Gülle, sonstigen mikrobiologischen oder nachwachsenden Biomassen, **dadurch gekennzeichnet,** daß die Biomasse, gegebenenfalls nach einer Vorbehandlung, in einer Temperatur-Druck-Hydrolyse (TDH) ohne Zugabe von Alkali in der Flüssigphase bei > 180 bis 300 °C, und in einem ein- oder mehrstufigen, indirekt beheizten Hydrolysereaktorsystem, gegebenenfalls unter Anwendung von anorganischen Katalysatoren wie Ca, Na und K, behandelt wird, wobei eine Restmasse als Feststoffphase und eine mit organischen monomeren Wertstoffen angereicherte Flüssigphase anfällt.

2. Verfahren nach Anspruch 1, **dadurch gekennzeichnet,** daß die von Schadstoffen wie z. B. Schwermetallen weitgehend befreite Restmasse als Dünger oder Bodenverbesserer benutzt wird.

3. Verfahren nach mindestens einem der vorhergehenden Ansprüche, **dadurch gekennzeichnet,** daß die Behandlung der TDH-Stufe bei > 180 bis 250 °C und Verweilzeiten von 30 bis 120 Minuten erfolgt.

4. Verfahren nach mindestens einem der vorhergehenden Ansprüche, **dadurch gekennzeichnet,** daß die bei der Hydrolyse von Proteiden anfallenden Aminosäuren, die Spaltprodukte der Desaminierung wie $NH_3$ und der Decarboxylierung wie $CO_2$ als wäßrige Lösung in den Hydrolyseprozeß rückgeführt werden.

5. Verfahren nach mindestens einem der vorhergehenden Ansprüche, **dadurch gekennzeichnet,** daß die Behandlung in der TDH-Stufe bei 250 bis 300 °C und Verweilzeiten von 30 bis 120 Minuten erfolgt.

6. Verfahren nach mindestens einem der vorhergehenden Ansprüche, **dadurch gekennzeichnet,** daß durch Zugabe von Additiven, z. B. Mineralsäuren oder Laugen, die Schwermetalle des Klärschlammes in eine wasserlösliche Form umgewandelt und im Hydrolysat gelöst werden.

7. Verfahren nach mindestens einem der vorhergehenden Ansprüche, **dadurch gekennzeichnet,** daß die Flüssigphase bzw. das Hydrolysat in einer Cross-Flow-Filtration (CFF) und das dabei anfallende Konzentrat unter Zugabe des Additivs in einer Umkehrosmose zur Abtrennung einer die Schwermetalle enthaltenden Salzlösung behandelt wird.

8. Verfahren nach mindestens einem der vorhergehenden Ansprüche, **dadurch gekennzeichnet,** daß der bei der Abwasserreinigung anfallende wäßrige Klärschlamm nach Vorwärmung auf 60 bis 100 °C im Wärmeaustausch mit dem Hydrolysat in einem mechanischen Dekanter nach der Aufhebung der wasserbindenden Kräfte des Klärschlammes, gegebenenfalls ohne Filterhilfsmittel, auf 6 bis 8 % Trockensubstanz eingedickt wird und daß das anfallende Filtrat in die biologische Reinigungsstufe zurückgeführt wird.

9. Verfahren nach mindestens einem der vorhergehenden Ansprüche, **dadurch gekennzeichnet,** daß das Hydrolysat nach Abtrennung der Restmasse und der wasserlöslichen organischen Fraktion mittels eines Strippers von flüchtigen Hydrolyseprodukten befreit wird und die Strippdämpfe in einer fraktionierenden Kondensation verflüssigt und ganz oder teilweise in den Hydrolyseprozeß zurückgeführt werden.

10. Verfahren nach mindestens einem der vorhergehenden Ansprüche, **dadurch gekennzeichnet,** daß das vorbehandelte Hydrolysat in einer nach dem Prinzip der fraktionierenden Umkehrosmose arbeitenden Verfahrensstufe in anorganische und organische wäßrige Fraktionen aufgetrennt wird.

11. Verfahren nach mindestens einem der vorhergehenden Ansprüche, **dadurch gekennzeichnet,** daß der wäßrige Klärschlamm bzw. die Biomase im Gegenstrom in einem Wärmeaustauschersystem durch das Reaktionsgemisch vorgewärmt wird.

12. Verfahren nach mindestens einem der vorhergehenden Ansprüche, **dadurch gekennzeichnet,** daß die nach der Hydrolyse abgetrennte Restmasse mittels eines Filters, z. B. Vakuumdrehfilters, auf mindestens 80 Gew% Trockensubstanz getrocknet wird.

13. Verfahren nach mindestens einem der vorhergehenden Ansprüche, **dadurch gekennzeichnet,** daß eine bei der Hydrolyse anfallende aminosäurereiche Fraktion als Viehfutterzusatz verwendet wird.

14. Verfahren nach mindestens einem der vorhergehenden Ansprüche, **dadurch gekennzeichnet,** daß das Retentat der Cross-Flow-Filtration und ein Teil der Retentate der Umkehrosmose-Stufe der Hydrolysataufbereitung zwecks Steuerung der Spaltung in den Hydrolyseprozeß recycled werden.

**Claims**

1. Process for the treatment of biomass, for example sewage sludge arising during biological effluent treatment, liquid manure, other microbiological or regrowing biomass, **characterized in that** the biomass, after a pretreatment should this be necessary, is treated by means of a temperature-pressure hydrolysis process without the addition of alkali in the liquid phase at temperatures between 180 and 300°C and in a one- or multi-stage indirectly heated hydrolysis reactor system, if necessary by making use of in-organic catalysts such as Ca, Na and K, with such process yielding a residual mass as solids phase and a liquid phase containing monomeric organic valuable substances.

2. Process according to Claim 1 **characterized in that** the residual mass largely freed from pollutants such as, for instance, heavy metals is employed as fertilizer or soil improving substance.

3. Process according to at least one of the above described Claims **characterized in that** the treatment in the temperature-pressure hydrolysis stage is effected at temperatures between 180 and 250°C and retention times ranging between 30 and 120 minutes.

4. Process according to at least one of the above described Claims **characterized in that** the amino acids arising in the hydrolysis of proteides, the decomposition products of deamination such as $NH_3$ and of decarboxylation such as $CO_2$ are returned to the hydrolysis process in the form of an aqueous solution.

5. Process according to at least one of the above described Claims **characterized in that** treatment by means of the temperature-pressure hydrolysis stage is carried out at temperatures ranging between 250 and 300°C and retention times between 30 and 120 minutes.

6. Process according to at least one of the above described Claims **characterized in that** the heavy metals contained in the sewage sludge are converted into a water-soluble form and dissolved in the hydrolysate through the addition of additives, for example, mineral acids or solutions.

7. Process according to at least one of the above described Claims **characterized in that** the liquid phase or the hydrolysate is treated by cross-flow filtration (CFF) and the arising concentrate with additive by reverse osmosis with a view to separating a salt solution containing the heavy metals.

8. Process according to at least one of the above described Claims **characterized in that** the hydrous sewage sludge resulting from effluent treatment after counteracting the water-storing capability of the sewage sludge is thickened to 6 to 8 % dry substance, possibly without filtering aids if thought expedient, after preheating to 60 to 100°C by a heat exchanging process with the hydrolysate in a mechanical decanter and that the arising filtrate is returned to the biological cleaning stage.

9. Process according to at least one of the above described Claims **characterized in that** subsequent to the separation of the residual mass and the water-soluble organic fraction by means of a stripper the hydrolysate is freed from the volatile hydrolysis products and the stripper fumes are liquefied in a fractionating condensation process and returned to the hydrolysis process wholly or in part.

10. Process according to at least one of the above described Claims **characterized in that** the pretreated hydrolysate is split up into inorganic and organic aqueous fractions in a process stage operating according to the fractionating reverse osmosis principle.

11. Process according to at least one of the above described Claims **characterized in that** the aqueous sewage sludge or the biomass is preheated in a heat exchanging system is a counter-current flow to the reaction mixture.

12. Process according to at least one of the above described Claims **characterized in that** the residual mass separated after the hydrolysis process is dried to at least 80 % by weight dry substance by means of a filter, e.g. a rotary vacuum filter.

13. Process according to at least one of the above described Claims **characterized in that** an amino-acid rich fraction generated by the hydrolysis process is used as an addition to fodder.

14. Process according to at least one of the above described Claims **characterized in that** the retentate of the cross-flow filtration and part of the retentates of the reverse osmosis stage of the hydrolysate preparation system are recycled to the hydrolysis process in order to control decomposition.

**Revendications**

1. Procédé de traitement des biomasses, par ex. des boues d'épuration générées lors de l'épuration biologique d'effluents, du lisier et autres biomasses microbiologiques ou de croissance ultérieure
   **caractérisé par le fait**
   que la biomasse est traitée, le cas échéant après avoir été soumise à un prétraitement, dans une hydrolyse température-presion (HTP) sans addition d'alcali dans la phase liquide à des températures de > 180 à 300 °C et dans un réacteur à hydrolyse à une ou plusieurs phases et chauffé indirectement, le cas échéant en employant des catalyseurs inorganiques tels que Ca, Na, et K, une masse résiduaire en tant que phase solide et une phase liquide avec des matières valables monomères organiques en résultant.

2. Procédé selon la revendication 1
   **caractérisé par le fait**
   que la masse résiduaire libérée en grande partie des substances nuisibles telles que les métaux lourds est utilisée comme engrais ou comme améliorateur du sol.

3. Procédé selon au moins l'une des revendications précédentes
   **caractérisé par le fait**
   que le traitement de la phase HTP est effectué à des températures situées entre > 180 et 250°C et que les temps de séjour sont de 30 à 120 minutes.

4. Procédé selon au moins l'une des revendications précédentes
   **caractérisé par le fait**
   que les aminoacides produits lors de l'hydrolyse de protéides, les produits de craquage de la désamina-tion tels que $NH_3$ et ceux de la décarboxylation tels que $CO_2$ sont reconduits dans le processus d'hydrolyse sous forme de solution aqueuse.

5. Procédé selon au moins l'une des revendications précédentes
   **caractérisé par le fait**
   que le traitement dans la phase HTP a lieu à des températures situées entre 250 et 300 °C et que les temps de séjour sont de 30 à 120 minutes.

6. Procédé selon au moins l'une des revendications précédentes
   **caractérisé par le fait**
   que les métaux lourds de la boue d'épuration sont transformés en une forme soluble dans l'eau et dissous dans l'hydrolysat par addition d'additifs comme p. ex. d'acides minéraux ou de lessives.

7. Procédé selon au moins l'une des revendications précédentes
   **caractérisé par le fait**
   que la phase liquide à savoir l'hydrolysat est traitée dans un système de cross-flow -filtration (CFF) et que le concentrat produit auquel est ajouté l'additif est traité dans une osmose inverse en vue de séparer une solution saline contenant les métaux lourds.

8. Procédé selon au moins l'une des revendications précédentes
   **caractérisé par le fait**
   que la boue d'épuration aqueuse produite lors de l'épuration des effluents, après avoir été préchauffée à une température située entre 60 et 100 °C, est concentrée à un taux de substance sèche de l'ordre de 6 à 8 % lors de l'échange de chaleur avec l'hydrolysat dans un décanteur mécanique après que les forces de la boue d'épuration liant l'eau ont été neutralisées, le cas échéant sans adjuvant de filtrage, et que le filtrat généré est reconduit dans la phase de nettoyage biologique.

9. Procédé selon au moins l'une des revendications précédentes
   **caractérisé par le fait**
   que l'hydrolysat, après avoir été séparé de la masse résiduaire et de la fraction organique soluble dans l'eau est libéré des produits d'hydrolyse volatils au moyen d'un stripper et que les vapeurs de strippage sont liquéfiées dans une condensation de fractionnement et reconduites entièrement ou partiellement dans le processus d'hydrolyse.

10. Procédé selon au moins l'une des revendications précédentes
    **caractérisé par le fait**
    que l'hydrolysat prétraité est séparé en des fractions aqueuses inorganiques et organiques dans une phase du procédé travaillant selon le principe de l'osmose inverse de fractionnement.

11. Procédé selon au moins l'une des revendications précédentes
    **caractérisé par le fait**
    que la boue d'épuration aqueuse à savoir la biomasse est préchauffée en contre-courant par le mélange de réaction dans un système d'échange de chaleur.

12. Procédé selon au moins l'une des revendications précédentes
    **caractérisé par le fait**
    que la masse résiduaire séparée après l'hydrolyse est séchée au moyen d'un filtre, p. ex. d'un filtre sous vide, à un taux de substance sèche de l'ordre d'au moins 80 % en poids.

13. Procédé selon au moins l'une des revendications précédentes
    **caractérisé par le fait**
    qu'une fraction riche en aminoacide et produite lors de l'hydrolyse est utilisée comme supplément d'aliment pour bétail.

14. Procédé selon au moins l'une des revendications précédentes
    **caractérisé par le fait**
    que le rétentat de la cross-flow-filtration et une partie des rétentats de la phase d'osmose inverse du traitement de l'hydrolysat sont recyclés dans le processus d'hydrolyse dans le but de la commande du craquage.

Fig. 1

EP 0 377 832 B1

Fig. 1a

Fig. 2

EP 0 377 832 B1

35

3a

6a

CFF-1

20a    21

22a    RO-1

23a

24a    RO-2

27a

Fig. 2a